# EUROPEAN PATENT APPLICATION

(11) **EP 4 538 051 A1**
(43) Date of publication of application: **16.04.2025**
(21) Application number: 23867118.4
(22) Date of filing: 25.07.2023
(51) Int. Cl.: B60B 19/06, F03G 7/08, F16F 15/124, F16F 15/16

(54) **HUB MECHANISM, WHEEL APPARATUS, POWER GENERATION DEVICE, AND TRAVELING SYSTEM**

(30) Priority: 19.09.2022 CN 202211138494
(71) Applicant: Sun, Xizhou, Huizhou, Guangdong 516000 (CN)
(72) Inventor: Sun, Xizhou, Huizhou, Guangdong 516000 (CN)
(74) Representative: Chung, Hoi Kan
(86) International application number: PCT/CN2023/109192
(87) International publication number: WO 2024/060823

(57) **Abstract**

A hub mechanism, used for connecting to a driving buffer assembly, the hub mechanism includes a hub body and multiple piston assemblies. The hub body defines multiple piston chambers and multiple piston hole sets, each piston hole set includes multiple piston holes, and each piston chamber is communicated with the corresponding piston hole set's multiple piston holes. The outer peripheral wall of the hub body is arranged to connect to the driving buffer assembly. Each piston assembly comprises a piston plate and multiple piston unit columns, with multiple piston unit columns arranged in parallel and connected to the piston plate. The piston plate of each piston assembly is located within the corresponding piston chamber and is slidably connected to the hub body. The multiple piston unit columns correspond one-to-one with the multiple piston holes of the respective piston hole sets, with each piston unit column being slidably connected to the hub body. Each piston unit column is arranged to connect to the driving buffer assembly. Each piston chamber is used to communicate with the inlet of the power generation mechanism when the hub body rotates to a first predetermined angular position, and to communicate with the outlet of the power generation mechanism when the hub body rotates to a second predetermined angular position.

## Description

### TECHNICAL FIELD

This application relates to a hub mechanism, wheel assembly, power generation device, and driving system.

### BACKGROUND

Driving systems are categorized into automobiles, trucks, electric vehicles, motorcycles, and others. For example, automobiles are divided into types such as fuel-powered vehicles, gas-powered vehicles, and electric vehicles based on the energy converted into power. During the early stages of automobiles, the wheels resemble those of trains, meaning the automobile wheels are purely metallic, such as steel wheels. During the driving process on the ground, the wheels undergo almost no deformation. Although there is no energy loss due to wheel deformation during driving, there are issues of vibration and poor comfort during the driving process.

Therefore, regardless of the type of automobile, the wheels are equipped with tires, allowing the wheels to resolve issues of vibration and poor comfort through the deformation of the tires, thereby enabling the automobile to meet the requirements for shock absorption and comfort. This simultaneously brings about the problem of significant drive power loss. In other words, to compensate for the issues of vibration and poor comfort, the power loss caused by the deformation of the tires accounts for a large proportion of the drive power loss. Additionally, apart from being converted into power, the energy of automobiles also needs to provide lighting, in-car air conditioning cooling, or external speakers, resulting in a high energy consumption demand for automobiles.

To alleviate the energy consumption demand of automobiles, driving systems incorporate power generation mechanisms, enabling the driving system to generate power synchronously during the driving process, as disclosed in patent CN102358184A.

However, the hubs of the aforementioned driving systems are relatively large in volume under the same power generation requirements, making the wheel assemblies of automobiles relatively bulky.

### SUMMARY

Based on the above, it is necessary to provide a hub mechanism, wheel assembly, power generation device, and driving system with a smaller volume for the wheel assembly.

A hub mechanism for mounting a driving buffer assembly, the hub mechanism comprising:
a hub body, the hub body provided with a plurality of piston chambers and a plurality of piston hole groups, each piston hole group comprising a plurality of piston holes, each piston chamber being respectively connected to the plurality of piston holes of the corresponding piston hole group; the outer peripheral wall of the hub body is configured to mount the driving buffer assembly;
a plurality of piston assemblies, each piston assembly comprising a piston plate and a plurality of piston unit columns, the plurality of piston unit columns being connected in parallel to the piston plate, the piston plate of each piston assembly located within the corresponding piston chamber and slidably connected to the hub body, the plurality of piston unit columns corresponding one-to-one with the plurality of piston holes of the corresponding piston hole group, each piston unit column being slidably connected to the hub body and configured to connect to the driving buffer assembly; each piston chamber is configured to communicate with an inlet of the power generation device when the hub body is rotated to a first predetermined angular position and to communicate with an outlet of the power generation device when the hub is rotated to a second predetermined angular position.

A wheel assembly comprising a driving buffer assembly and the hub mechanism as described in any one of the preceding embodiments, the inner peripheral wall of the driving buffer assembly forming an elastically deformable portion, the outer peripheral wall of the hub body mounting onto the driving buffer assembly, and each piston unit column connected to the elastically deformable portion.

A power generation device comprising a power generation mechanism and the wheel assembly as described in any one of the preceding embodiments, each piston chamber being configured to communicate with an inlet of the power generation mechanism when the hub is rotated to a first predetermined angular position and to communicate with an outlet of the power generation mechanism when the hub is rotated to a second predetermined angular position.

A driving system comprising a shaft, a driving main body, and the power generation device as described in any one of the preceding embodiments, the hub body connected to the shaft, the shaft rotatably connected to the driving main body, and the power generation mechanism mounted on the driving main body;
the wheel assembly further comprising a plurality of damping assemblies, the plurality of damping assemblies being correspondingly arranged with the plurality of piston assemblies; each damping assembly comprising a connecting plate, an elastic support assembly, and a first elastic limiting block, the connecting plate of each damping assembly connected between the clamp of the corresponding piston assembly and the piston.

Details of one or more embodiments of the present application are presented in the accompanying drawings and descriptions below. Other features, objectives, and advantages of the present application will become apparent from the specification, drawings, and claims.

### BRIEF DESCRIPTION OF THE DRAWINGS

In order to more clearly illustrate the technical solutions of embodiments of the present application or the prior art, the following provides a brief introduction to the drawings required for describing the embodiments or prior art. It will be apparent to those skilled in the art that the drawings described below are merely some embodiments of the present application, and those skilled in the art can derive other embodiments based on these drawings without requiring inventive efforts.
Figure 1 is a schematic diagram of a power generation device in one embodiment;
Figure 2 is a schematic diagram of the wheel assembly of the power generation device shown in Figure 1;
Figure 3 is a partial schematic diagram of the hub mechanism of the wheel assembly shown in Figure 1;
Figure 4 is a cross-sectional view of the hub mechanism shown in Figure 3;
Figure 5 is a partial schematic diagram of the hub mechanism shown in Figure 3;
Figure 6 is another partial schematic diagram of the wheel assembly of the power generation device shown in Figure 1;
Figure 7 is a partial schematic diagram at location A of the power generation device shown in Figure 1;
Figure 8 is a schematic diagram of another perspective of the wheel assembly of the power generation device shown in Figure 1;
Figure 9 is a partial schematic diagram of the wheel assembly shown in Figure 8;
Figure 10 is a partial schematic diagram of the power generation mechanism of the power generation device shown in Figure 1.

### DETAILED DESCRIPTION

For ease of understanding the present application, the following provides a more comprehensive description of the present application with reference to the related drawings. The best mode for carrying out the present application is illustrated in the drawings. However, the present application can be realized in many different forms and is not limited to the embodiments described herein. On the contrary, the purpose of providing these embodiments is to make the disclosure of the present application more thorough and complete. It should be noted that when a component is referred to as "fixed to" another component, it can be directly fixed to the other component or may include an intermediary component. When a component is considered to be "connected" to another component, it can be directly connected to the other component or may include an intermediary component. The terms "vertical," "horizontal," "left," "right," and similar expressions used herein are solely for descriptive purposes and do not indicate the only possible embodiments. Unless otherwise defined, all technical and scientific terms used herein have the same meaning as those understood by those skilled in the art in the relevant technical field of the present application. The terms used in the specification of the present application are intended solely for the purpose of describing specific embodiments and are not intended to limit the present application. The term "and/or" as used herein includes any and all combinations of one or more of the listed items.

The present application provides a hub mechanism for mounting a driving buffer assembly. The hub mechanism comprises a hub body and a plurality of piston assemblies. The hub body is provided with a plurality of piston chambers and a plurality of piston hole groups, each piston hole group comprising a plurality of piston holes. Each piston chamber is respectively connected to the plurality of piston holes of the corresponding piston hole group. The outer peripheral wall of the hub body is configured to mount the driving buffer assembly. Each piston assembly comprises a piston plate and a plurality of piston unit columns. The plurality of piston unit columns are connected in parallel to the piston plate. The piston plate of each piston assembly is located within the corresponding piston chamber and is slidably connected to the hub body. The plurality of piston unit columns correspond one-to-one with the plurality of piston holes of the corresponding piston hole group. Each piston unit column is slidably connected to the hub body and is configured to connect to the driving buffer assembly. Each piston chamber is configured to communicate with an inlet of the power generation device when the hub body is rotated to a first predetermined angular position and to communicate with an outlet of the power generation device when the hub is rotated to a second predetermined angular position.

The aforementioned hub mechanism, due to each piston chamber being configured to communicate with an inlet of the power generation device when the hub body is rotated to a first predetermined angular position and to communicate with an outlet of the power generation device when the hub body is rotated to a second predetermined angular position, allows each piston assembly to slide to different positions relative to the hub body as the hub body rotates to different positions. This enables the power generation device to generate power continuously. Furthermore, since each piston hole group comprises multiple piston holes and each piston chamber is respectively connected to the plurality of piston holes of the corresponding piston hole group, and since each piston assembly includes a piston plate and multiple piston unit columns, deformation occurs at the contact point between the hub assembly and the ground when the hub assembly rolls relative to the ground. Because each piston unit column is connected to the driving buffer assembly, the deformation generated by the driving buffer assembly drives the multiple piston unit columns of the corresponding piston assembly to slide relative to the hub body. The plurality of piston unit columns are connected in parallel to the piston plate, reducing the space occupied by each piston assembly on the outer peripheral wall of the hub body. Additionally, since the piston plate of each piston assembly is located within the corresponding piston chamber and is slidably connected to the hub body, and the plurality of piston unit columns correspond one-to-one with the plurality of piston holes of the corresponding piston hole group, each piston unit column is slidably connected to the hub body. This configuration allows the piston plate of each piston assembly to simultaneously drive multiple piston unit columns to slide relative to the hub body. Consequently, multiple piston unit columns can simultaneously act on the same piston plate. Under the condition of the same power generation output, the required surface area for the piston assemblies arranged circumferentially around the hub body is significantly reduced, thereby decreasing the volume of the hub body. This, in turn, reduces the overall volume of the wheel assembly. In other words, under the condition of the same hub body volume, the hub mechanism generates greater power during the driving process while simultaneously improving the dynamic performance of the hub mechanism.

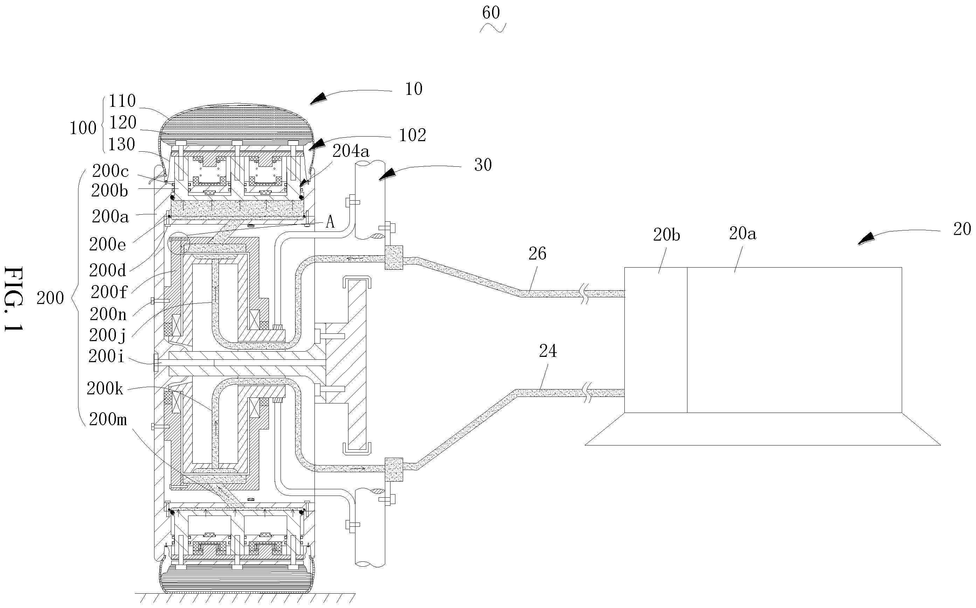

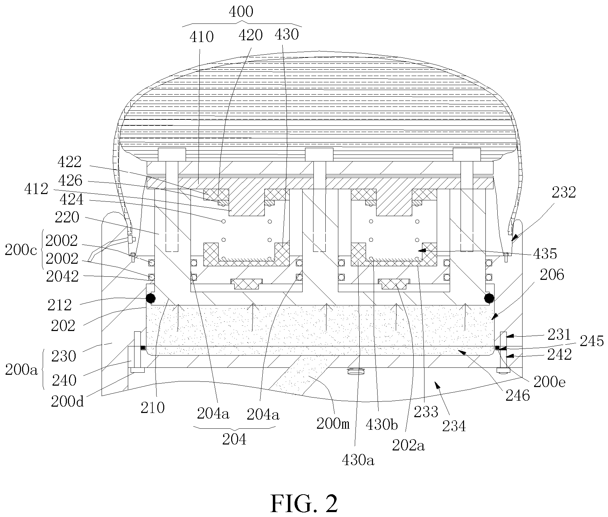

To better understand the technical solutions and beneficial effects of the present application, the following provides a more detailed description of the present application with reference to specific embodiments:
As shown in Figures 1 and 2, a wheel assembly 10 in one embodiment includes a driving buffer assembly 100 and a hub mechanism 200. The hub mechanism 200 is mounted onto the driving buffer assembly 100, with the outer peripheral wall of the hub mechanism 200 encasing the driving buffer assembly 100, thereby allowing the driving buffer assembly 100 to be mounted onto the outer peripheral wall of the hub mechanism 200. Furthermore, the hub mechanism 200 comprises a hub body 200a and a plurality of piston assemblies 200b. The hub body 200a is provided with a plurality of piston chambers 202 and a plurality of piston hole groups 204, each piston hole group 204 comprising a plurality of piston holes 204a. Each piston chamber 202 is respectively connected to the plurality of piston holes 204a of the corresponding piston hole group 204. The outer peripheral wall of the hub body 200a is configured to encase the driving buffer assembly 100, enabling the driving buffer assembly 100 to be mounted onto the outer peripheral wall of the hub body 200a.

Furthermore, each piston assembly 200b includes a piston plate 210 and a plurality of piston unit columns 220. The plurality of piston unit columns 220 are connected in parallel to the piston plate 210. The piston plate 210 of each piston assembly 200b is located within the corresponding piston chamber 202 and is slidably connected to the hub body 200a. The plurality of piston unit columns 220 are arranged in one-to-one correspondence with the plurality of piston holes 204a of the corresponding piston hole group 204. Each piston unit column 220 is slidably connected to the hub body 200a and is connected to the driving buffer assembly 100. In this embodiment, the inner peripheral wall of the driving buffer assembly 100 forms an elastically deformable zone, and each piston unit column 220 is connected to the elastically deformable zone. When the driving buffer assembly 100 rolls in contact with the ground, the portion of the driving buffer assembly 100 that contacts the ground undergoes deformation, causing the elastically deformable zone to deform. The "plurality" as described in the present application refers to two or more, including the case of two. It is understood that each piston unit column 220 can be directly connected to the elastically deformable zone or indirectly connected to the elastically deformable zone. In this embodiment, each piston unit column 220 is indirectly connected to the elastically deformable zone.

When the driving buffer assembly 100 rolls in contact with the ground, the portion of the driving buffer assembly 100 that contacts the ground undergoes deformation. The elastically deformable zone of the driving buffer assembly 100 deforms under compression, causing adjacent piston assemblies 200b to slide relative to the hub body 200a. This means that multiple piston unit columns 220 of the piston assembly 200b slide relative to the hub body 200a. As the hub body 200a continues to roll relative to the ground, each piston assembly 200b is able to reciprocate cyclically relative to the hub body 200a, periodically compressing the hydraulic fluid in one piston chamber 202, allowing the hydraulic fluid to be periodically pressurized into another piston chamber 202.

Furthermore, each piston chamber 202 is configured to communicate with an inlet 24 of the power generation mechanism 20 when the hub body 200a is rotated to a first predetermined angular position and to communicate with an outlet 26 of the power generation mechanism 20 when the hub body 200a is rotated to a second predetermined angular position. This configuration allows the hydraulic fluid in the piston chamber 202 to flow out to the inlet 24 of the power generation mechanism 20 when the hub body 200a is rotated to the first predetermined angular position, and to be pressurized into the hydraulic fluid through the outlet 26 of the power generation mechanism 20 when the hub body 200a is rotated to the second predetermined angular position. Thus, the hydraulic fluid circulates within the power generation mechanism 20, driving the power generation mechanism 20 to operate and generate electrical energy.

The aforementioned wheel assembly 10 and its hub mechanism 200, due to each piston chamber 202 being configured to communicate with the inlet 24 of the power generation mechanism 20 when the hub body 200a is rotated to the first predetermined angular position and to communicate with the outlet 26 of the power generation mechanism 20 when the hub body 200a is rotated to the second predetermined angular position, allow each piston assembly 200b to slide to different positions relative to the hub body 200a as the hub body 200a rotates to different positions. This enables the power generation mechanism 20 to generate power continuously. Additionally, since each piston hole group 204 comprises multiple piston holes 204a and each piston chamber 202 is respectively connected to the plurality of piston holes 204a of the corresponding piston hole group 204, and since each piston assembly 200b includes a piston plate 210 and multiple piston unit columns 220, deformation occurs at the contact point between the hub assembly and the ground when the hub assembly rolls relative to the ground. Because each piston unit column 220 is connected to the driving buffer assembly 100, the deformation generated by the driving buffer assembly 100 drives the multiple piston unit columns 220 of the corresponding piston assembly 200b to slide relative to the hub body 200a. The plurality of piston unit columns 220 connected in parallel to the piston plate 210 reduces the space occupied by each piston assembly 200b on the outer peripheral wall of the hub body 200a. Furthermore, since the piston plate 210 of each piston assembly 200b is located within the corresponding piston chamber 202 and is slidably connected to the hub body 200a, and the plurality of piston unit columns 220 correspond one-to-one with the plurality of piston holes 204a of the corresponding piston hole group 204, each piston unit column 220 is slidably connected to the hub body 200a. This configuration allows the piston plate 210 of each piston assembly 200b to simultaneously drive multiple piston unit columns 220 to slide relative to the hub body 200a, enabling multiple piston unit columns 220 to act simultaneously on the same piston plate 210. Under the condition of the same power generation output, this significantly reduces the surface area required for the piston assemblies 200b arranged circumferentially around the hub body 200a, decreases the volume of the hub body 200a, and thereby reduces the overall volume of the wheel assembly 10. In other words, under the condition of the same hub body volume, the hub mechanism generates greater power during the driving process while simultaneously improving the dynamic performance of the hub mechanism.

In one embodiment, each inner peripheral wall of each piston hole 204a of each piston hole group 204 forms a positioning groove 2042. The hub mechanism 200 further includes a plurality of piston ring groups 200c, each piston ring group 200c comprising a plurality of piston rings 2002. The plurality of piston rings of each piston ring group 200c are arranged within the corresponding positioning groove 2042 of each piston hole 204a of the corresponding piston hole group 204, thereby enabling each piston unit column 220 to be tightly slidably connected within the corresponding piston hole 204a, preventing leakage.

As shown in Figures 1 and 2, in one embodiment, the plurality of piston unit columns 220 of each piston assembly are arranged side by side at the same radial cross-section on the outer peripheral wall of the hub body 200a. That is, the plurality of piston unit columns 220 of the same piston assembly 200b are arranged perpendicularly to the tangential direction of the outer peripheral wall of the hub body 200a. In other words, the plurality of piston unit columns 220 of the same piston assembly 200b are arranged side by side in the radial width direction of the hub body 200a, reducing the space occupied by each piston assembly 200b on the outer peripheral wall of the hub body 200a. This allows the piston plate 210 of each piston assembly 200b to better simultaneously drive multiple piston unit columns 220 to slide relative to the hub body 200a, enabling multiple piston unit columns 220 to better simultaneously act on the same piston plate 210. Under the condition of the same power generation output, the surface area required for the piston assemblies 200b arranged circumferentially around the hub body 200a is minimized, significantly reducing the volume of the hub body 200a, thereby reducing the overall volume of the wheel assembly 10. In this embodiment, the radial cross-section passes through the diameter of the outer peripheral wall of the hub body 200a, and the radial cross-section passes through the central axis line of the hub body's rolling, that is, the central axis line is within the radial cross-section. The plurality of piston unit columns 220 of each piston assembly are arranged side by side at the same radial cross-section on the outer peripheral wall of the hub body 200a, that is, the direction in which the plurality of piston unit columns 220 of each piston assembly are arranged side by side is parallel to the direction of the central axis line of the hub body 200a. The plurality of piston hole groups are uniformly distributed along the circumferential direction of the hub body, placing the plurality of piston assemblies at multiple different circumferential positions along the hub body 200a's circumferential direction.

As shown in Figures 1 and 2, furthermore, each piston assembly 200b has a sealing scraping ring 212 on the outer peripheral wall of the piston plate 210. The sealing scraping ring 212 is slidably connected to the inner peripheral wall of the piston chamber 202, enabling the piston plate 210 of each piston assembly 200b to be tightly slidably connected to the piston chamber 202. It is understood that, in one embodiment, the sealing scraping ring 212 can be a silicone ring or carbon fiber ring, among others.

As shown in Figures 1 and 2, in one embodiment, the hub body 200a comprises a hub 230 and an annular cover plate 240. The outer peripheral wall of the hub 230 forms an installation ring groove 232, which is used to mount the driving buffer assembly 100. The hub 230 is provided with a plurality of piston slots 206 and a plurality of piston hole groups 204. The annular cover plate 240 is mounted on the inner peripheral wall of the hub 230 to enclose the plurality of piston chambers 202. In this embodiment, one side of the hub 230 forms a displacement groove 234. The installation ring groove 232 is formed on the inner peripheral wall of the displacement groove 234, allowing the annular cover plate 240 to be mounted on the inner peripheral wall of the hub 230's displacement groove 234, thereby reducing the space occupied by the annular cover plate 240 and making the structure of the hub mechanism 200 more compact. In one embodiment, one side of the hub 230 with the displacement groove is arranged near the suspension 30.

As shown in Figures 1 and 2, in one embodiment, the annular cover plate 240 is detachably connected to the inner peripheral wall of the hub 230, and the annular cover plate 240 is tightly connected to the inner peripheral wall of the hub 230. This facilitates the disassembly or maintenance of the hub mechanism 200, improving the usability of the hub mechanism 200. In this embodiment, the hub mechanism 200 further includes a plurality of fasteners 200d. The annular cover plate 240 is provided with a plurality of installation through-holes 242, and the inner peripheral wall of the hub 230 is provided with a plurality of threaded holes 231. Each fastener 200d is respectively inserted through the corresponding installation through-hole 242 and the corresponding threaded hole 231, enabling the annular cover plate 240 to be detachably connected to the inner peripheral wall of the hub 230.

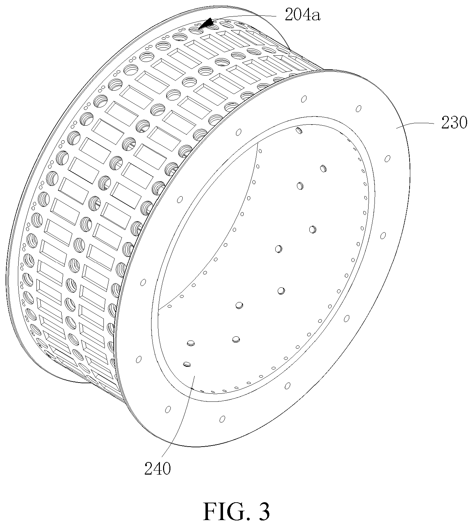

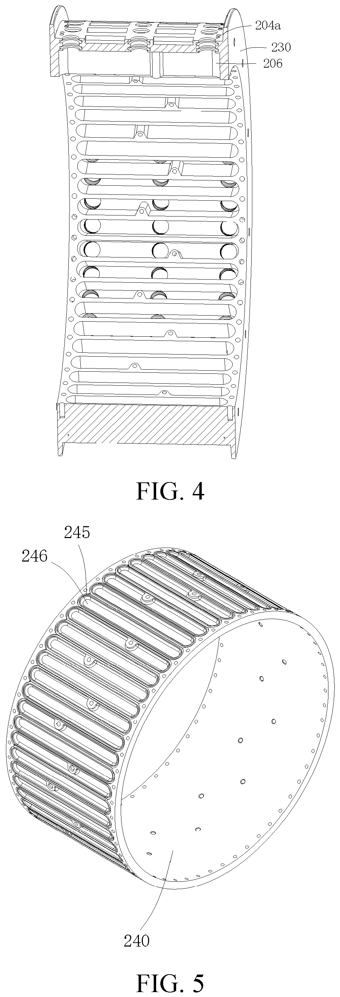

As shown in Figures 1 and 2, in one embodiment, the inner peripheral wall of the annular cover plate 240 is provided with a plurality of connecting grooves 246, each connecting groove 264 being respectively connected to a piston slot 206 to better form multiple piston chambers 202. Also refer to Figures 3 to 5, furthermore, the inner peripheral wall of the annular cover plate 240 is provided with a plurality of sealing ring grooves 245. The hub mechanism 200 further includes a plurality of sealing rings 200e. Each sealing ring groove 245 is arranged around the corresponding connecting groove, and multiple sealing rings 200e are respectively protruding within the corresponding sealing ring groove 245, preventing leakage of the piston chamber 202 and ensuring the annular cover plate 240 is tightly connected to the inner peripheral wall of the hub 230.

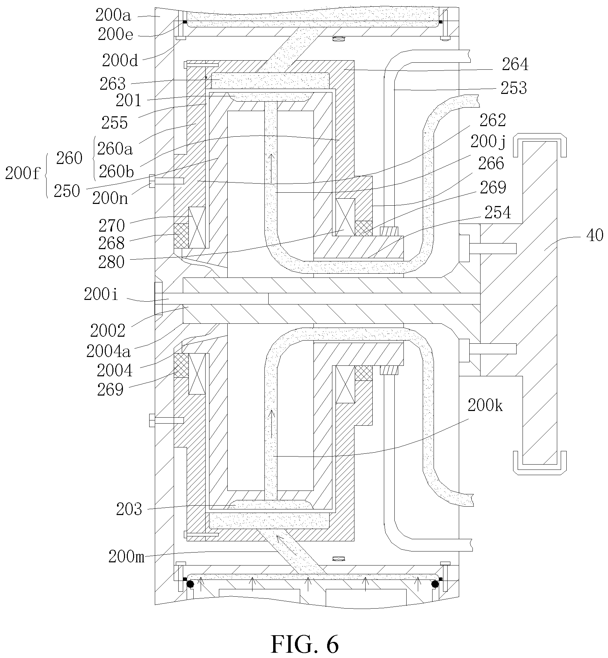

As shown in Figures 1 and 6, in one embodiment, the hub mechanism 200 further includes an oil guiding structure 200f, which comprises a guiding fluid plate 250 and a rotating sleeve 260. The guiding fluid plate 250 is installed on the suspension 30, and the rotating sleeve 260 is connected to the hub body 200a. The rotating sleeve 260 is rotatably connected to the guiding fluid plate 250, with a sealing liquid gap 255 existing between the rotating sleeve 260 and the guiding fluid plate 250. The guiding fluid plate 250 is provided with a first buffer chamber 201 and a second buffer chamber 203, both of which are connected to the sealing liquid gap 255. The first buffer chamber 201 is connected to the inlet 24 of the power generation mechanism 20, and the second buffer chamber 203 is connected to the outlet 26 of the power generation mechanism 20. Each piston chamber 202 is configured to communicate with the first buffer chamber 201 when the hub body 200a is rotated to a first predetermined angular position, and to communicate with the second buffer chamber 203 when the hub body 200a is rotated to a second predetermined angular position. This causes each piston chamber 202 to communicate with the inlet 24 of the power generation mechanism 20 when the hub body 200a is rotated to the first predetermined angular position, and to communicate with the outlet 26 of the power generation mechanism 20 when the hub body 200a is rotated to the second predetermined angular position. In this embodiment, the guiding fluid plate 250 is fixed to the suspension 30, causing the guiding fluid plate 250 to remain stationary relative to the suspension 30, while the rotating sleeve 260 is connected to the hub body 200a, allowing the guiding fluid plate 250 and the rotating sleeve 260 to rotate relative to each other. This enables the oil guiding structure to guide the hydraulic fluid from the piston chamber 202 into the power generation mechanism 20, and to guide the hydraulic fluid from the power generation mechanism 20 back into the piston chamber 202. This eliminates the need to integrate the power generation mechanism 20 directly onto the hub mechanism 200, thereby reducing the volume of the hub mechanism 200, especially the hub body 200a. Specifically, the oil guiding structure is arranged within the displacement groove 234, and the power generation mechanism 20 is mounted on the vehicle frame. It is understood that the sealing liquid gap 255 is very small. Although some hydraulic fluid may enter the sealing liquid gap 255 within the first buffer chamber 201 or the second buffer chamber 203, the small size of the sealing liquid gap 255 prevents smooth flow, only allowing a membrane layer that blocks flow to form, thus preventing leakage or flow of hydraulic fluid that would lead to hydraulic interference between adjacent piston assemblies 200b. Furthermore, the guiding fluid plate 250 is fixedly installed on the suspension 30 via a fixed clamp 253. In this embodiment, one end of the fixed clamp is fitted over the guiding fluid plate 250, and the other end is fixedly installed to the suspension 30.

As shown in Figures 1 and 6, in one embodiment, the guiding fluid plate 250 is provided with displacement holes 254, and the hub body 200a is provided with protruding connecting shafts 2002. The connecting shafts pass through the displacement holes and are used to connect to the brake disc 40. In this embodiment, the connecting shafts are connected to the connection discs of the brake discs. The connecting shafts connect the brake disc 40 to the rotating shaft (not shown), and the rotating shaft drives the rotation of the hub body 200a through the connecting shafts. The rotating shaft is the driving shaft of the driving system, and the driving shaft is connected to the drive mechanism of the driving system, such as connecting the driving shaft to the output end of the transmission of the driving system. Furthermore, the hub body 200a is detachably connected to the connecting shafts. Furthermore, the surface of the hub body 200a is provided with protruding portions 2004, which are provided with threaded grooves 2004a. One end of the connecting shaft is located within the threaded grooves and is threadedly connected to the protruding portions 2004. Moreover, the rotational direction of the threaded connection between the connecting shafts and the threaded grooves 2004a is opposite to the rotation direction of the hub mechanism 200 during normal driving of the driving system, and the same as the rotation direction when the driving system is in reverse, thereby preventing the connection between the hub body 200a and the connecting shafts from easily loosening. Furthermore, the hub mechanism 200 further includes a center bolt 200i. The hub is provided with a fixing hole, and the connecting shaft is provided with a center hole. The center bolt is inserted through the fixing hole, with a portion of the center bolt located within the center hole and fixedly connected to the connecting shaft. It is understood that, in other embodiments, the threaded grooves 2004a are not limited to being provided on the protruding portions but can also be provided on the connecting shafts. In this embodiment, the outer peripheral wall of the protruding portions is provided with threads. And/or,

As shown in Figures 1 and 6, in one embodiment, the oil guiding structure 200f further includes a first bearing 270 and a second bearing 280. The inner rings of the first bearing 270 and the second bearing 280 are both mounted on the guiding fluid plate 250, and both ends of the rotating sleeve 260 are respectively mounted on the outer rings of the first bearing 270 and the second bearing 280, ensuring that the rotating sleeve 260 is reliably rotatably connected to the guiding fluid plate 250. Furthermore, the rotating sleeve 260 includes a first rotating connecting part 262, a pressure-bearing part 264, and a second rotating connecting part 266. The diameters of both the first rotating connecting part 262 and the second rotating connecting part 266 are smaller than the diameter of the pressure-bearing part 264. The first buffer chamber 201 and the second buffer chamber 203 are both formed in the pressure-bearing part 264. The two ends of the rotating sleeve 260 are respectively rotatably connected to the first rotating connecting part 262 and the second rotating connecting part 266. In this embodiment, the first rotating connecting part 262 is mounted on the outer ring of the first bearing 270, and the second rotating connecting part 266 is mounted on the outer ring of the second bearing 280.

As shown in Figures 1 and 6, furthermore, the oil guiding structure 200f also includes a first oil seal 268 and a second oil seal 269. Both the first oil seal 268 and the second oil seal 269 are mounted on the guiding fluid plate 250. The first oil seal 268 is located on the side of the first bearing 270 away from the second bearing 280, and the second oil seal 269 is located on the side of the second bearing 280 away from the first bearing 270. In this embodiment, the first rotating connecting part 262 is mounted on the first oil seal 268, and the second rotating connecting part 266 is mounted on the second oil seal 269. The first rotating connecting part 262 is located on the side of the first bearing 270 away from the second bearing 280, and the second rotating connecting part 266 is located on the side of the second bearing 280 away from the first bearing 270, thereby serving as an oil seal. In this embodiment, both the first oil seal 268 and the second oil seal 269 are rubber oil seals, ensuring that both the first oil seal 268 and the second oil seal 269 have good oil sealing effects. And/or,

As shown in Figures 1 and 6, in one embodiment, the hub mechanism 200 further includes an inlet pipe 200k and an outlet pipe 200j. The inlet pipe 200k is respectively connected to the first buffer chamber 201 and the inlet 24 of the power generation mechanism 20, thereby connecting the first buffer chamber 201 with the inlet 24 of the power generation mechanism 20. The outlet pipe 200j is respectively connected to the second buffer chamber 203 and the outlet 26 of the power generation mechanism 20, thereby connecting the second buffer chamber 203 with the outlet 26 of the power generation mechanism 20. In this embodiment, there exists a gap between the guiding fluid plate 250 and the connecting shaft 2002, and both the inlet pipe 200k and the outlet pipe 200j pass through this gap. In this embodiment, the guiding fluid plate 250 is provided with a first installation pipe opening and a second installation pipe opening. The inlet pipe 200k is connected to the guiding fluid plate 250 through the first installation pipe opening, and the first installation pipe opening is connected to the first buffer chamber 201. The outlet pipe 200j is connected to the guiding fluid plate 250 through the second installation pipe opening, and the second installation pipe opening is connected to the second buffer chamber 203. And/or,

As shown in Figures 1 and 6, in one embodiment, the hub mechanism 200 further includes multiple fluid pipes 200m. Each fluid pipe 200m is connected at both ends to the rotating sleeve 260 and the hub body 200a, respectively. The inner peripheral wall of the rotating sleeve 260 forms multiple staggered steady liquid grooves 263. Each fluid pipe 200m is respectively connected to the corresponding piston chamber 202 and the corresponding steady liquid groove 263 at both ends. Each steady liquid groove 263 is used to connect with the first buffer chamber when the hub body 200a is rotated to the first predetermined angular position, and to connect with the second buffer chamber 203 when the hub body 200a is rotated to the second predetermined angular position. This configuration allows each piston chamber 202 to communicate with the inlet 24 of the power generation mechanism 20 when the hub body 200a is rotated to the first predetermined angular position, and to communicate with the outlet 26 of the power generation mechanism 20 when the hub body 200a is rotated to the second predetermined angular position.

As shown in Figures 1 and 6, furthermore, the rotating sleeve 260 is detachably connected to the hub, thereby improving the usability of the hub mechanism 200. Furthermore, the hub mechanism 200 also includes fastening screws 200n. The hub is provided with mounting through-holes, and the rotating sleeve 260 is provided with fastening screw holes. The fastening screws 200n are respectively inserted through the mounting through-holes and the fastening screw holes, enabling the rotating sleeve 260 to be detachably connected to the hub.

As shown in Figures 1 and 6, furthermore, the rotating sleeve 260 includes a rotating cover plate 260a and a rotating sleeve main body 260b. The rotating cover plate 260a is detachably connected to the rotating sleeve main body 260b, facilitating the disassembly and assembly of the rotating sleeve 260. In this embodiment, the first rotating connecting part 262 is provided on the rotating cover plate 260a, and the second rotating connecting part 266 is provided on the rotating sleeve main body 260b. The rotating cover plate 260a is fixedly connected to the hub via the fastening screws 200n. The steady liquid groove 263 is formed on the rotating sleeve main body 260b, and the fluid pipe 200m is connected to the rotating sleeve main body 260b. Furthermore, the rotating cover plate 260a is fixedly connected to the rotating sleeve main body 260b via locking screws.

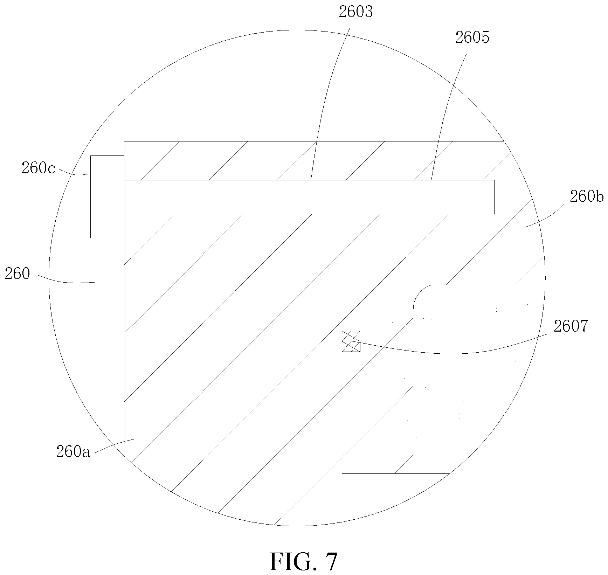

As shown in Figures 6 and 7, furthermore, the rotating cover plate 260a is provided with connecting through-holes 2603, and the rotating sleeve main body 260b is provided with locking screw holes 2605. The rotating sleeve 260 also includes locking screws 260c, which are respectively inserted through the connecting through-holes and the locking screw holes, enabling the rotating cover plate 260a to be fixedly connected to the rotating sleeve main body 260b via the locking screws. Furthermore, the rotating sleeve main body 260b is provided with annular sealing rings 2607 arranged circumferentially. The rotating cover plate 260a abuts against the annular sealing rings 2607, ensuring that the rotating sleeve main body 260b and the rotating cover plate 260a are tightly connected.

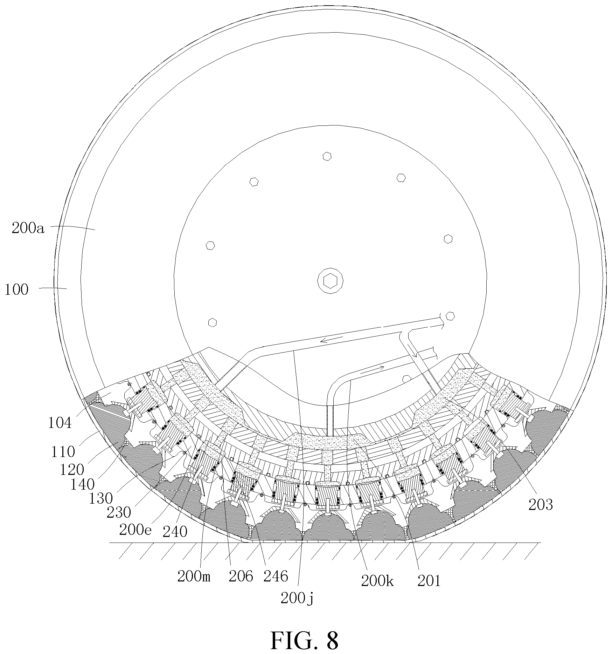

As shown in Figures 1 and 8, furthermore, the driving buffer assembly 100 includes a tire 110, fixed bulging members 120, an inflatable membrane 130, and elastic connecting blocks 140. The tire 110 is provided with an annular accommodation groove 102, and the tire 110 is mounted onto the hub, that is, the tire 110 is mounted onto the outer periphery of the hub. The number of fixed bulging members 120 is plural, and multiple fixed bulging members 120 are alternately arranged on the inner peripheral wall of the annular accommodation groove 102. Each fixed bulging member 120 is connected to the corresponding piston assembly 200b of the hub mechanism 200 that is slidably connected to the hub, that is, each fixed bulging member 120 is connected to the corresponding piston assembly 200b, allowing each piston unit column to be connected to the driving buffer assembly. The inflatable membrane 130 is located within the annular accommodation groove 102, and the inflatable membrane 130 is connected to at least the piston assembly 200b corresponding to each fixed bulging member 120, allowing the inflatable membrane 130 to cover the opening of the annular accommodation groove 102, thereby enclosing an inflatable cavity 104 within the annular accommodation groove 102. The number of elastic connecting blocks 140 is plural; each elastic connecting block 140 is respectively connected to two adjacent fixed bulging members 120 and is also located within the annular accommodation groove 102 and connected to the tire 110, thereby forming an elastically deformable zone on the inner peripheral wall of the driving buffer assembly. In this embodiment, the elastically deformable zones are respectively formed on each elastic connecting block and the tire 110. During use, air is pumped into the inflatable cavity 104, which not only supports the spatial regions between adjacent fixed bulging members 120, providing the driving buffer assembly 100 with good vibration damping and buffering performance to reduce vibrations generated during driving, but also facilitates heat dissipation of the tire 110 and makes air leakage less likely. It is understood that the inflated gas can be nitrogen or other inert gases. Furthermore, an inflation valve is provided on the hub, with one end of the inflation valve located on the outer side of the hub and the other end located within the inflatable cavity 104, allowing inflation through the inflation valve.

Since the tire 110 is mounted onto the hub 200 of the hub mechanism 200, multiple fixed bulging members 120 are alternately arranged on the inner peripheral wall of the annular accommodation groove 102, and each fixed bulging member 120 is connected to the corresponding piston assembly 200b that is slidably connected to the hub, when the hub rotates with the rotating shaft, the rotating shaft drives the hub and the tire 110 to rotate. This causes the outer peripheral wall of the tire 110 to come into contact with the ground as the hub body 200a rotates. Additionally, each elastic connecting block 140 is respectively connected to two adjacent fixed bulging members 120 and is also located within the annular accommodation groove 102 and connected to the tire 110. Since each elastic connecting block 140 has good deformability, the fixed bulging members 120 are better propelled by the deformation of the tire 110 to drive the piston assemblies 200b to slide relative to the hub, achieving good vibration damping effects. Moreover, the inflatable membrane 130 is located within the annular accommodation groove 102 and is connected to at least the piston assembly 200b corresponding to each fixed bulging member 120, thereby enclosing the annular accommodation groove 102 into an inflatable cavity 104. Air is pumped into the inflatable cavity 104, which not only supports the spatial regions between adjacent fixed bulging members 120, providing the driving buffer assembly 100 with good vibration damping and buffering performance to reduce vibrations generated during driving, but also facilitates heat dissipation of the tire 110 and makes air leakage less likely.

As shown in Figures 1 and 8, furthermore, the inflatable membrane 130 is also connected to the hub 230, allowing the inflatable membrane 130 to be connected to both the hub 230 and the multiple piston assemblies 200b. This enables the inflatable membrane 130 to better enclose the annular accommodation groove 102 into the inflatable cavity 104. In this embodiment, the inflatable membrane 130 is connected to the outer peripheral wall of the hub 230, and the connection points of the inflatable membrane 130 to the hub are fixed points. The number of fixed points is plural, allowing the inflatable membrane 130 to better enclose the annular accommodation groove 102 into the inflatable cavity 104. Furthermore, at least one fixed point is provided on the inflatable membrane 130 between two adjacent fixed bulging members 120, allowing the inflatable membrane 130 to better enclose the annular accommodation groove 102 into the inflatable cavity 104.

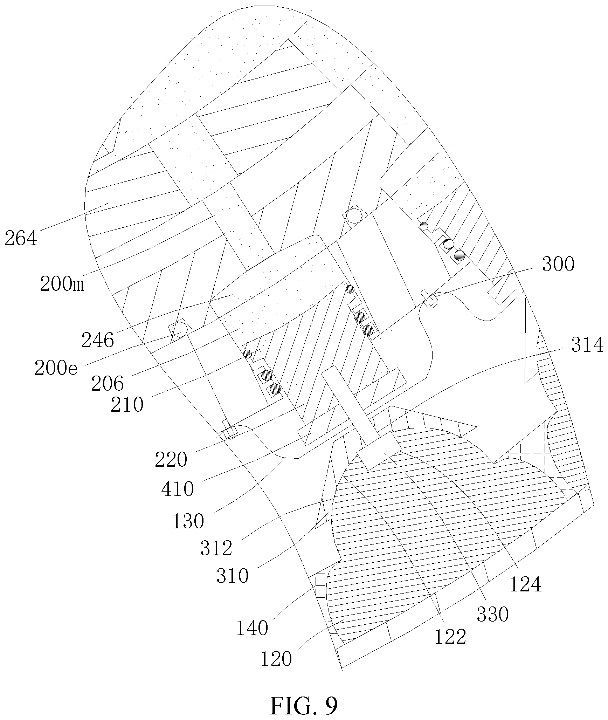

As shown in Figures 1, 8, and 9, furthermore, the inflatable membrane 130 is also detachably connected to the hub 230. In this embodiment, the wheel assembly 10 further includes a plurality of first fasteners 300, each fixed point is fixedly connected to the outer peripheral wall of the hub via the first fasteners 300. It is understood that, in other embodiments, the fastening method is not limited to being secured by the first fasteners but can also utilize other detachable connection methods.

Furthermore, the fixed bulging members 120 are made of plastic or carbon fiber materials. Since each elastic connecting block 140 is respectively connected to two adjacent fixed bulging members 120 and is also located within the annular accommodation groove 102 and connected to the tire 110, the tire 110 has good strength between two adjacent elastic connecting blocks 140, and the compressive deformability strength of each elastic connecting block 140 is enhanced. This also ensures that the tire 110 has better buffering and vibration damping performance during driving. Since the fixed bulging members 120 are made of plastic or hard rubber materials, they possess good supporting strength, thereby allowing the fixed bulging members 120 to better act on the corresponding piston assemblies 200b. In this embodiment, each fixed bulging member 120 is adhesively fixedly connected to the inner wall of the annular accommodation groove 102, ensuring that each fixed bulging member 120 is reliably fixedly connected to the tire 110.

As shown in Figures 1 and 8, furthermore, there is a gap between two adjacent fixed bulging members 120, and elastic connecting blocks 140 are filled into the gap. This ensures that the surface of the tire 110 between two adjacent elastic connecting blocks 140 has good strength, enhances the compressive deformability strength of each elastic connecting block 140, and ensures that the tire 110 has better buffering and vibration damping performance during driving. Additionally, the thickness of the tire 110's surface is increased, thereby improving the tire 110's puncture and air leakage resistance.

As shown in Figures 1 and 8, furthermore, the elastic connecting blocks 140 are elastic rubber blocks, providing the elastic connecting blocks 140 with good elasticity and allowing them to be better connected and fixed to the fixed bulging members 120. In this embodiment, the elastic connecting blocks 140 are molded into the gaps between two adjacent fixed bulging members 120 through a molding process, allowing the elastic connecting blocks 140 to be better fixedly connected to the fixed bulging members 120. And/or,

As shown in Figures 1 and 8, furthermore, the hardness of the elastic connecting blocks 140 is less than that of the fixed bulging members 120. This ensures that the compressive deformability resistance of the elastic connecting blocks 140 is less than that of the fixed bulging members 120. Additionally, since each elastic connecting block 140 is connected to two adjacent fixed bulging members 120, it prevents the elastic connecting blocks 140 from deforming excessively and adversely affecting the vibration resistance of the wheel assembly 10 during rolling, thereby ensuring that the wheel assembly 10 operates more smoothly during rolling.

As shown in Figures 1, 8, and 9, furthermore, each piston assembly 200b further includes a clamp 310, with each piston unit column 220 of each piston assembly 200b located within the corresponding piston hole 204a of the piston hole group 204 and slidably connected to the hub; each fixed bulging member 120 is connected to the clamp 310 of the corresponding piston assembly 200b, thereby enabling each piston assembly 200b to better fixedly connect with the corresponding fixed bulging member 120. The inflatable membrane 130 is at least connected between the clamp 310 of each piston assembly 200b and the corresponding piston unit column 220, ensuring that the inflatable membrane 130 is reliably fixedly connected to the piston assembly 200b. In this embodiment, each clamp 310 forms an arcuate groove 312, and each fixed bulging member 120 forms an arcuate protrusion 122, with each arcuate protrusion 122 of the fixed bulging member 120 located within the arcuate groove 312 and connected to the corresponding clamp 310, thereby enabling each clamp 310 to better connect to the corresponding fixed bulging member 120, and allowing each fixed bulging member 120 to better act on the piston via the corresponding clamp 310.

As shown in Figures 1, 8, and 9, furthermore, each piston assembly 200b further includes at least multiple fastening screws 330, with each fastening screw 330 fixedly connecting the clamp 310 to the piston, the inflatable membrane 130 being clamped between the clamp 310 and the piston, thereby fixedly connecting the inflatable membrane 130 to the clamp 310 and the corresponding piston of each piston assembly 200b. In this embodiment, each clamp 310 is provided with a connecting hole 314, each piston is provided with a threaded hole, and the inflatable membrane 130 is provided with a through-hole. Each fastening screw 330 is respectively inserted through the connecting hole, the through-hole, and the threaded hole, thereby better fixedly connecting the inflatable membrane 130 to the clamp 310 and the corresponding piston of each piston assembly 200b. Specifically, each arcuate protrusion 122 of each fixed bulging member 120 forms a void groove 124, with the head of each fastening screw 330 located within the void groove 124 and connected to the arcuate protrusion 122 of the corresponding fixed bulging member 120, thereby making the structure of each piston assembly 200b more compact.

As shown in Figures 1, 2, and 9, furthermore, the wheel assembly 10 further includes a plurality of damping assemblies 400, with multiple damping assemblies 400 correspondingly arranged with multiple piston assemblies 200b; each damping assembly 400 includes a connecting plate 410, an elastic support assembly 420, and a first elastic limiting block 430, with each connecting plate 410 of each damping assembly 400 connected between the clamp 310 of the corresponding piston assembly 200b and the piston, thereby fixing each damping assembly 400 between the clamp 310 and the piston of the corresponding piston assembly 200b. In this embodiment, each connecting plate 410 of each damping assembly 400 is located on the outer periphery of the hub and connected between the clamp 310 of the corresponding piston assembly 200b and the piston. Furthermore, each first elastic limiting block 430 of each damping assembly 400 is connected to the outer peripheral wall of the hub, and each elastic support assembly 420 of each damping assembly 400 is set between the corresponding connecting plate 410 and the first elastic limiting block 430. When the piston slides relative to the hub, the elastic support assembly 420 of each damping assembly 400 undergoes deformation changes due to compression, thereby reducing the vibrations generated during the sliding of the piston relative to the hub. Combined with the synergistic effects of various components of the driving buffer assembly 100, such as the fixed bulging members 120 and the inflatable membrane 130, the damping assemblies 400 further reduce the vibrations generated during the rotation of the driving buffer assembly 100, ensuring smoother sliding of the piston relative to the hub and preventing large impact forces from directly contacting between the connecting plate 410 and the roller wheel.

As shown in Figures 1 and 2, furthermore, each elastic support assembly 420 of each damping assembly 400 includes a fixed plate 422 and an elastic member 424, with the fixed plate 422 mounted on the connecting plate 410, one end of the elastic member 424 connected to the fixed plate 422, and the other end of the elastic member 424 connected to the first elastic limiting block 430, thereby setting each elastic support assembly 420 between the corresponding connecting plate 410 and the first elastic limiting block 430. In this embodiment, the connecting plate 410 is provided with mounting protrusions 412, with the fixed plate 422 mounted on the mounting protrusions 412, and the elastic member 424 arranged around the mounting protrusions 412, thereby allowing the elastic member 424 to maintain good centering during compression deformation, and enabling the elastic support assembly 420 to better elastically connect between the corresponding connecting plate 410 and the first elastic limiting block 430.

As shown in Figures 1 and 2, furthermore, each elastic support assembly 420 of each damping assembly 400 further includes an elastic washer 426, with the elastic washer 426 mounted on the mounting protrusions 412, and the fixed plate 422 fixedly connected to the connecting plate 410 via the elastic washer 426. The end of the elastic member 424 is connected to the elastic washer 426, thereby better elastically fixedly connecting the fixed plate 422 to the connecting plate 410. Through the combined effect of the elastic washer 426 and the elastic member 424, the elastic support assembly 420 has better elasticity. Furthermore, the hub 230 is provided with mounting grooves 233, with each first elastic limiting block 430 located within a mounting groove 233 and fixedly connected to the hub, and the ends of the elastic member 424 are fixedly connected to the elastic support assembly 420. In this embodiment, each first elastic limiting block 430 forms a buffer groove 435 corresponding to the mounting protrusion 412, with one end of each elastic member 424 located within the buffer groove 435 and connected to the first elastic limiting block 430, thereby reducing the vibrations generated during the sliding of the piston relative to the hub by minimizing the deformation of the elastic support assembly 420 when the piston slides to the first limit position within the piston chamber 202, which occurs when the piston in the piston chamber 202 moves to the first limit position. At this time, the amount of hydraulic fluid in the piston chamber 202 is minimal, the mounting protrusion 412 moves into the buffer groove 435 along with the connecting plate 410, and the compression amount generated by the elastic member 424 is maximized, further reducing the vibrations generated during the sliding of the piston relative to the hub, thereby ensuring that the tire 110 device operates more smoothly during driving.

As shown in Figures 1 and 2, furthermore, the first elastic limiting block 430 includes a first elastic limiting block body 430a and a buffer pad 430b. The buffer groove 435 is formed in the first elastic limiting block body 430a. The buffer pad 430b is located within the buffer groove 435 and connected to the first elastic limiting block body 430a, and the buffer pad 430b is connected to the end of the elastic member 424, thereby fixedly connecting the elastic member 424 to the first elastic limiting block 430. In this embodiment, the buffer pad 430b is adhesively bonded to the first elastic limiting block body 430a, thereby reliably fixedly connecting the buffer pad 430b to the first elastic limiting block body 430a.

As shown in Figures 1 and 2, furthermore, each piston chamber 202 is provided with a second elastic limiting block 202a at the position adjacent to the connecting plate 410, corresponding to the piston assembly 200b. The second elastic limiting block 202a limits the sliding position of the piston assembly 200b within the piston chamber 202, preventing the piston assembly 200b from directly colliding with the internal cavity of the hub and thereby avoiding potential damage. Additionally, the connecting plate 410 of each damping assembly 400 is connected between the clamp 310 of the corresponding piston assembly 200b and the piston, thereby reliably allowing the piston assembly 200b to slide within the corresponding piston chamber 202.

As shown in Figure 1, the present application also provides a power generation device 60, including a power generation mechanism 20 and the above wheel assembly 10, wherein each piston chamber 202 is configured to communicate with the inlet 24 of the power generation mechanism 20 when the hub body is rotated to the first predetermined angular position, and to communicate with the outlet 26 of the power generation mechanism 20 when the hub body is rotated to the second predetermined angular position.

The aforementioned power generation device 60, because each piston chamber 202 is connected to the inlet 24 of the power generation mechanism 20 when the hub body 200a is rotated to a first predetermined angular position and is connected to the outlet 26 of the power generation mechanism 20 when the hub body 200a is rotated to a second predetermined angular position, allows each piston assembly 200b to slide to different positions relative to the hub body 200a as the hub body 200a rotates to different positions, thereby enabling the power generation mechanism 20 to continuously generate power. Since each piston hole group 204 comprises multiple piston holes 204a, and each piston chamber 202 is respectively connected to the multiple piston holes 204a of the corresponding piston hole group 204, and since each piston assembly 200b includes a piston plate 210 and multiple piston unit columns 220, when the hub assembly rolls relative to the ground, deformation occurs at the contact point between the hub assembly and the ground. Because each piston unit column 220 is connected to the driving buffer assembly 100, the deformation generated by the driving buffer assembly 100 drives the multiple piston unit columns 220 of the corresponding piston assembly 200b to slide relative to the hub body 200a. The multiple piston unit columns 220 are connected in parallel to the piston plate 210, reducing the space occupied by each piston assembly 200b on the outer peripheral wall of the hub body 200a. Additionally, since each piston assembly 200b's piston plate 210 is located within the corresponding piston chamber 202 and is slidably connected to the hub body 200a, and since each piston unit column 220 respectively corresponds one-to-one with the multiple piston holes 204a of the corresponding piston hole group 204, each piston unit column 220 is slidably connected to the hub body 200a, allowing each piston assembly 200b's piston plate 210 to simultaneously drive multiple piston unit columns 220 to slide relative to the hub body 200a. This allows multiple piston unit columns 220 to simultaneously act on the same piston plate 210. Under the condition of the same power generation output, this significantly reduces the surface area required for the piston assemblies 200b arranged circumferentially around the hub body 200a, decreases the volume of the hub body 200a, thereby reducing the overall volume of the wheel assembly 10. In other words, under the condition of the same hub body volume, the hub mechanism generates greater power during the driving process.

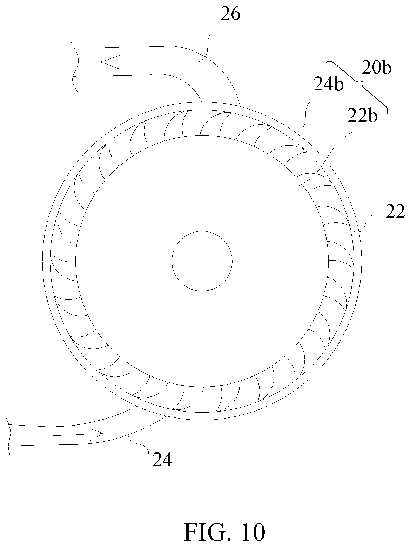

As shown in Figures 1 and 10, furthermore, the power generation mechanism 20 comprises a power generation mechanism main body 20a and a hydraulic drive assembly 20b. The hydraulic drive assembly 20b includes a housing 242 and a hydraulic drive wheel 244. The housing 242 forms a hydraulic flow chamber 22, an inlet 24, and an outlet 26, with the hydraulic flow chamber 22 being respectively connected to the inlet 24 and the outlet 26. The hydraulic drive wheel 244 is located within the hydraulic flow chamber 22 and is rotatably connected to the housing 242. The hydraulic drive wheel 244 is also connected to the power input end of the power generation mechanism main body 20a. When hydraulic fluid flows into through the inlet 24 and flows out through the outlet 26, the hydraulic fluid passes through the hydraulic flow chamber 22 and drives the hydraulic drive wheel 244 to rotate, thereby causing the hydraulic drive wheel 244 to drive the power generation mechanism main body 20a to generate electricity.

This application also provides a driving system, comprising a rotating shaft, a driving body, and the power generation device 60 of any of the aforementioned embodiments. The hub body 200a is connected to the rotating shaft, and the rotating shaft is rotatably connected to the driving body. The power generation mechanism 20 is mounted on the driving body. In this embodiment, the driving body is equipped with a suspension system 30.

The described driving system comprises a rotating shaft, a driving body, and power generation device 60. The hub body 200a is connected to the rotating shaft, and the rotating shaft is rotatably connected to the driving body. The power generation mechanism 20 is mounted on the driving body. As each piston chamber 202 rotates to a first predetermined angular position, it communicates with the inlet 24 of the power generation mechanism 20, and as it rotates to a second predetermined angular position, it communicates with the outlet 26 of the power generation mechanism 20. This allows each piston assembly 200b to slide to different positions relative to the hub body 200a as the hub body rotates to different positions, thereby enabling the power generation mechanism 20 to generate electricity continuously. Since each piston hole set 204 includes multiple piston holes 204a, each piston chamber 202 communicates with the multiple piston holes 204a of the corresponding piston hole set 204. Additionally, since each piston assembly 200b includes a piston plate 210 and multiple piston unit columns 220, when the hub assembly rolls relative to the ground, the contact points between the hub assembly and the ground deform. Because each piston unit column 220 is connected to the driving buffer assembly 100, the deformation produced by the driving buffer assembly 100 drives the corresponding piston assembly 200b, causing the multiple piston unit columns 220 to slide relative to the hub body 200a. The multiple piston unit columns 220 are arranged in parallel and connected to the piston plate 210, reducing the space each piston assembly 200b occupies on the outer peripheral wall of the hub body 200a. Moreover, the piston plate 210 of each piston assembly 200b is located within the corresponding piston chamber 202 and is slidably connected to the hub body 200a. The multiple piston unit columns 220 correspond one-to-one with the multiple piston holes 204a of the respective piston hole sets 204. Each piston unit column 220 is slidably connected to the hub body 200a, so that the piston plate 210 of each piston assembly 200b can simultaneously drive the multiple piston unit columns 220 to slide relative to the hub body 200a. This allows the multiple piston unit columns 220 to simultaneously act on the same piston plate 210. Under the same power generation conditions, this greatly reduces the surface area required by the piston assemblies 200b arranged circumferentially on the hub body 200a, reducing the volume of the hub body 200a and thus reducing the volume of the wheel device 10.

Furthermore, the hub body 200a is protrudingly provided with a connection shaft, which is used to connect to the brake disc 40. In this embodiment, the connection shaft is connected to the rotating shaft through the brake disc 40, and the rotating shaft drives the hub body 200a to rotate via the connection shaft. The rotating shaft is the driving shaft of the driving system and is connected to the driving mechanism of the driving system, such as being connected to the output end of the transmission system. In this embodiment, the connection shaft is connected to the connection plate of the brake disc 40.

Compared to the prior art, the present invention has at least the following advantages:
The hub mechanism 200, as described above, allows each piston chamber 202 to communicate with the inlet 24 of the power generation mechanism 20 when the hub body 200a rotates to a first predetermined angular position, and to communicate with the outlet 26 of the power generation mechanism 20 when the hub body rotates to a second predetermined angular position. This enables each piston assembly 200b to slide to different positions relative to the hub body 200a as the hub body rotates to different positions, thus allowing the power generation mechanism 20 to continuously generate electricity. Since each piston hole set 204 includes multiple piston holes 204a, each piston chamber 202 communicates with the multiple piston holes 204a of the corresponding piston hole set 204. Additionally, since each piston assembly 200b includes a piston plate 210 and multiple piston unit columns 220, when the hub assembly rolls relative to the ground, the contact points between the hub assembly and the ground deform. Because each piston unit column 220 is connected to the driving buffer assembly 100, the deformation produced by the driving buffer assembly 100 drives the corresponding piston assembly 200b, causing the multiple piston unit columns 220 to slide relative to the hub body 200a. The multiple piston unit columns 220 are arranged in parallel and connected to the piston plate 210, reducing the space each piston assembly 200b occupies on the outer peripheral wall of the hub body 200a. Moreover, the piston plate 210 of each piston assembly 200b is located within the corresponding piston chamber 202 and is slidably connected to the hub body 200a. The multiple piston unit columns 220 correspond one-to-one with the multiple piston holes 204a of the respective piston hole sets 204. Each piston unit column 220 is slidably connected to the hub body 200a, so that the piston plate 210 of each piston assembly 200b can simultaneously drive the multiple piston unit columns 220 to slide relative to the hub body 200a. This allows the multiple piston unit columns 220 to simultaneously act on the same piston plate 210. Under the same power generation conditions, this greatly reduces the surface area required by the piston assemblies 200b arranged circumferentially on the hub body 200a, reducing the volume of the hub body 200a and thus reducing the volume of the wheel device 10. In other words, under the same volume of the hub body, the power generation of the hub mechanism during operation is greater.

The technical features of the above-described embodiments can be combined in any way. To keep the description concise, not all possible combinations of technical features from the above embodiments have been described. However, any combination of these technical features that does not contradict each other should be considered within the scope of the application as described. The embodiments described above represent several modes of carrying out the present application. They are described in detail, but this should not be understood as limiting the scope of the invention. It should be noted that, for a person skilled in the art, several modifications and improvements can be made without departing from the concept of this application, all of which are within the scope of protection of this application. Therefore, the scope of protection of this application should be defined by the appended claims.

## Claims

1. A hub mechanism for connecting to a driving buffer assembly, **characterized in that** the hub mechanism comprising:
a hub body, the hub body defining multiple piston chambers and multiple piston hole sets, each piston hole set comprising multiple piston holes, and each piston chamber being communicated with the multiple piston holes of the corresponding piston hole set; the outer peripheral wall of the hub body is arranged to connect to the driving buffer assembly;
multiple piston assemblies, each piston assembly comprises a piston plate and multiple piston unit columns, the multiple piston unit columns being connected in parallel to the piston plate, the piston plate of each piston assembly being located within the corresponding piston chamber and being slidably connected to the hub body, the multiple piston unit columns corresponding one-to-one with the multiple piston holes of the respective piston hole sets, each piston unit column being slidably connected to the hub body, each piston unit column is arranged to connect to the driving buffer assembly; each piston chamber being used to communicate with an inlet of a power generation mechanism when the hub body rotates to a first predetermined angular position, and to communicate with an outlet of the power generation mechanism when the hub body rotates to a second predetermined angular position.

2. The hub mechanism according to claim 1, wherein each piston hole of each piston hole set has an inner peripheral wall formed with a positioning groove, and the hub mechanism further comprises multiple piston ring sets, each piston ring set comprising multiple piston rings, the multiple piston rings of each piston ring set being disposed in the corresponding positioning grooves of the piston holes of the respective piston hole sets.

3. The hub mechanism according to claim 1, wherein the multiple piston unit columns of each piston assembly are arranged in parallel at the same radial cross-section on the outer peripheral wall of the hub body.

4. The hub mechanism according to claim 1, wherein an outer peripheral wall of the piston plate of each piston unit has a sealing oil scraper ring, the sealing oil scraper ring being slidably connected to the inner peripheral wall of the piston chamber.

5. The hub mechanism according to claim 1, wherein the hub body comprises a hub and an annular cover plate, an outer peripheral wall of the hub comprising an installation ring groove, the installation ring groove being used for connecting the driving buffer assembly;
the hub defining multiple piston slots and multiple piston hole sets, the annular cover plate being disposed on an inner peripheral wall of the hub to enclose the multiple piston chambers.

6. The hub mechanism according to claim 5, wherein one side of the hub defines a clearance groove, and the installation ring groove is formed on an inner peripheral wall of the clearance groove.

7. The hub mechanism according to claim 5, wherein the annular cover plate is detachably connected to the inner peripheral wall of the hub, and the annular cover plate is tightly connected to the inner peripheral wall of the hub.

8. The hub mechanism according to claim 7, wherein the hub mechanism further comprises multiple locking members, the annular cover plate defining multiple mounting through-holes, and the inner peripheral wall of the hub defining multiple threaded holes, each locking member being disposed through the corresponding mounting through-hole and the corresponding threaded hole.

9. The hub mechanism according to claim 5, wherein an inner peripheral wall of the annular cover plate defines multiple communication grooves, the multiple communication grooves being communicated one-to-one with the multiple piston slots.

10. The hub mechanism according to claim 9, wherein the inner peripheral wall of the annular cover plate further defines multiple sealing ring grooves, and the hub mechanism further comprises multiple sealing rings, each sealing ring groove being arranged around the corresponding communication groove, and the multiple sealing rings being protrudingly disposed within the corresponding sealing ring grooves.

11. The hub mechanism according to claim 1, wherein the hub mechanism further comprises an oil guide structure, the oil guide structure comprises a liquid guide disc and a rotating sleeve, the liquid guide disc being mounted on a suspension, the rotating sleeve being connected to the hub body, the rotating sleeve being rotatably connected to the liquid guide discwith a liquid sealing gap defined between the rotating sleeve and the liquid guide disc, the liquid guide disc comprising a first buffer chamber and a second buffer chamber, both the first and second buffer chambers being communicated with the liquid sealing gap, the first buffer chamber is arranged to communicate with the inlet of the power generation mechanism, the second buffer chamber is arranged to communicate with the outlet of the power generation mechanism, and each piston chamber is arranged to communicate with the first buffer chamber when the hub body rotates to a first predetermined angular position, and to communicate with the second buffer chamber when the hub body rotates to a second predetermined angular position.

12. The hub mechanism according to claim 11, wherein the liquid guide disc comprises a clearance hole, and the hub body comprises a protruding connecting shaft, the connecting shaft passes through the clearance hole, the connecting shaft being used to connect to a brake disc.

13. The hub mechanism according to claim 12, wherein the hub body and the connecting shaft are detachably connected.

14. The hub mechanism according to claim 12, wherein the oil guide structure further comprises a first bearing and a second bearing, inner rings of the first and second bearings being sleeved on the liquid guide disc, and both ends of the rotating sleeve being sleeved on the outer rings of the first and second bearings.

15. The hub mechanism according to claim 14, wherein the oil guide structure further comprises a first oil seal and a second oil seal, the first and second oil seals being sleeved on the liquid guide disc, the first oil seal being located on a side of the first bearing away from the second bearing, and the second oil seal being located on a side of the second bearing away from the first bearing.

16. The hub mechanism according to claim 12, wherein the rotating sleeve comprises a first rotating connection part, a pressure-bearing part, and a second rotating connection part, a diameter of the first and second rotating connection parts being smaller than that of the pressure-bearing part; the first and second buffer chambers being formed in the pressure-bearing part; both ends of the rotating sleeve being rotatably connected to the first and second rotating connection parts.

17. The hub mechanism according to claim 12, wherein the hub mechanism further comprises an inlet pipe and an outlet pipe, the inlet pipe communicating with the first buffer chamber and the inlet of the power generation mechanism, the outlet pipe communicating with the second buffer chamber and the outlet of the power generation mechanism.

18. The hub mechanism according to claim 17, wherein there is a through-pipe gap defined between the liquid guide disc and the connecting shaft, the inlet pipe and the outlet pipe pass through the through-pipe gap; the liquid guide disc comprises a first installation pipe opening and a second installation pipe opening, the inlet pipe being connected to the liquid guide disc through the first installation pipe opening, and the first installation pipe opening communicates with the first buffer chamber, the outlet pipe being connected to the liquid guide disc through the second installation pipe opening, and the second installation pipe opening communicates with the second buffer chamber.

19. The hub mechanism according to claim 12, wherein the hub mechanism further comprises multiple liquid-through pipes, each liquid-through pipe comprising ends connected to the rotating sleeve and the hub body, an inner peripheral wall of the rotating sleeve defining multiple spaced stabilizing grooves, each liquid-through pipe comprising ends communicating with the corresponding piston chamber and the corresponding stabilizing groove, each stabilizing groove is arranged to communicate with the first buffer chamber when the hub body rotates to a first predetermined angular position, and to communicate with the second buffer chamber when the hub body rotates to a second predetermined angular position.

20. The hub mechanism according to claim 19, wherein the rotating sleeve is detachably connected to the hub body.

21. The hub mechanism according to claim 20, wherein the hub mechanism further comprises a fixing screw, the hub body comprises a mounting through hole, the rotating sleeve having a fixing screw hole, and the fixing screw being passed through the mounting through hole and the fixing screw hole.

22. The hub mechanism according to claim 21, wherein the rotating sleeve comprises a rotating cover plate and a rotating sleeve body, the rotating cover plate being detachably connected to the rotating sleeve body; the first rotating connection part being arranged on the rotating cover plate, the second rotating connection part being arranged on the rotating sleeve body; the rotating cover plate being fixedly connected to the hub body by the fixing screw; the stabilizing groove being formed in the rotating sleeve body, and the liquid-through pipe being connected to the rotating sleeve body.

23. The hub mechanism according to claim 22, wherein the rotating cover plate defines a connecting through hole, the rotating sleeve body defines a locking screw hole, and the rotating sleeve further comprises a locking screw, the locking screw being passed through the connecting through hole and the locking screw hole.

24. The hub mechanism according to claim 22, wherein the rotating sleeve body comprises an annular sealing ring protruding along the circumferential direction, and the rotating cover plate abuts against the annular sealing ring.

25. A wheel device, comprising a driving buffer assembly and the hub mechanism according to any one of claims 1 to 24, wherein an inner peripheral wall of the driving buffer assembly comprises an elastic deformation portion, an outer peripheral wall of the hub body being sleeved on the driving buffer assembly, and each piston unit column being connected to the elastic deformation portion.

26. The wheel device according to claim 25, wherein the driving buffer assembly comprises a tire, a fixed boss member, an inflatable membrane, and an elastic connecting block; the tire comprising an annular accommodation groove, the tire being sleeved on the hub; the fixed boss member comprises multiple fixed boss members, and being spaced apart on an inner peripheral wall of the annular accommodation groove, each fixed boss member being connected to the corresponding piston assembly of the hub mechanism that is slidingly connected to the hub, the inflatable membrane being located in the annular accommodation groove, the inflatable membrane being connected to each piston assembly corresponding to each fixed boss member, and the elastic connecting blocks being multiple in number; each elastic connecting block being connected to two adjacent fixed boss members, and each elastic connecting block also being located in the annular accommodation groove and connected to the tire, such that the inner peripheral wall of the driving buffer assembly defines an elastic deformation area.

27. The wheel device according to claim 26, wherein the inflatable membrane is also connected to the hub.

28. The wheel device according to claim 27, wherein the inflatable membrane is also detachably connected to the hub.

29. The wheel device according to claim 26, wherein the fixed boss members are made of plastic or carbon fiber.

30. The wheel device according to claim 26, wherein there is a gap between two adjacent fixed boss members, and the elastic connecting block fills the gap.

31. The wheel device according to claim 26, wherein the elastic connecting block is an elastic rubber block.

32. The wheel device according to claim 26, wherein the hardness of the elastic connecting block is smaller than the hardness of the fixed boss member.

33. The wheel device according to claim 26, wherein each piston assembly further comprises a rubber hoop member, and the piston unit column of each piston assembly is located in the piston hole of the corresponding piston hole group and is slidingly connected to the hub; each fixed boss member is connected to the rubber hoop member of the corresponding piston assembly, and the inflatable membrane is at least connected between the rubber hoop member of each piston assembly and the corresponding piston unit column.

34. The wheel device according to claim 33, wherein each piston assembly further comprises at least multiple fixing screws, each fixing screw fixing the rubber hoop member to the piston, and the inflatable membrane being pressed and fixed between the rubber hoop member and the piston.

35. The wheel device according to claim 33, wherein the wheel device further comprises multiple vibration-damping components, and the multiple vibration-damping components are correspondingly arranged with the multiple piston assemblies; each vibration-damping component comprises a connecting plate, an elastic support component, and a first elastic limiting block, with each connecting plate of the vibration-damping component being connected between the rubber hoop member and the piston of the corresponding piston assembly, and the connecting plate of each vibration-damping component being located on an outer periphery of the hub and connecting between the rubber hoop member and the piston of the corresponding piston assembly; each first elastic limiting block of each vibration-damping component is connected to the outer peripheral wall of the hub, and the elastic support component of each vibration-damping component is located between the connecting plate and the first elastic limiting block.

36. The wheel device according to claim 35, wherein each elastic support component of the vibration-damping component comprises a fixing plate and an elastic piece, with the fixing plate being installed on the connecting plate, one end of the elastic piece being connected to the fixing plate, and the other end of the elastic piece being connected to the first elastic limiting block.

37. The wheel device according to claim 36, wherein each elastic support component of the vibration-damping component further comprises an elastic gasket, and the elastic gasket is sleeved on the mounting boss, with the fixing plate being fixedly connected to the connecting plate via the elastic gasket, and the end of the elastic piece being connected to the fixing plate through the elastic gasket.

38. The wheel device according to claim 36, wherein the outer peripheral wall of the hub defines an installation groove, and the first elastic limiting block is located within the installation groove and is fixedly connected to the hub, with the end of the elastic piece being fixedly connected to the elastic support component.

39. The wheel device according to claim 36, wherein the first elastic limiting block comprises a first elastic limiting block body and a cushioning pad, with a cushioning recess formed in the first elastic limiting block body, the cushioning pad being located within the cushioning recess and connected to the first elastic limiting block body, and the cushioning pad being connected to the end of the elastic piece.

40. The wheel device according to claim 36, wherein each piston cavity comprises a second elastic limiting block protruding near the connecting plate, and the second elastic limiting block is correspondingly arranged with the piston assembly.

41. A power generation device, comprising a power generation mechanism and the wheel device according to any of claims 25 to 40, wherein each piston cavity communicates with a liquid inlet end of the power generation mechanism when the hub rotates to the first predetermined angle position, and communicates with the liquid outlet end of the power generation mechanism when the hub rotates to the second predetermined angle position.

42. The power generation device according to claim 41, wherein the power generation mechanism comprises a power generation mechanism body and a hydraulic drive assembly, with the hydraulic drive assembly comprising a housing and a hydraulic drive wheel, the housing having a hydraulic flow chamber, a liquid inlet end, and a liquid outlet end, and the hydraulic flow chamber being in communication with the liquid inlet end and the liquid outlet end; the hydraulic drive wheel being located in the hydraulic flow chamber and rotatably connected to the housing, and the hydraulic drive wheel also being connected to the power input end of the power generation mechanism body.

43. A driving system, comprising a rotating shaft, a driving body, and the power generation device according to claim 41 or 42, with the hub body being connected to the rotating shaft, the rotating shaft being rotatably connected to the driving body, and the power generation mechanism being arranged on the driving body; the wheel device further comprising multiple vibration-damping components, with the multiple vibration-damping components being correspondingly arranged with the multiple piston assemblies; each vibration-damping component having a connecting plate, an elastic support component, and a first elastic limiting block, with the connecting plate of each vibration-damping component being connected between the rubber hoop member and the piston of the corresponding piston assembly.
